# EUROPEAN PATENT APPLICATION

(11) **EP 3 617 841 A1**
(43) Date of publication of application: **04.03.2020**
(21) Application number: 19182131.3
(22) Date of filing: 25.06.2019
(51) Int. Cl.: G06F 1/26

(54) **ELECTRONIC DEVICE, METHOD FOR PROVIDING STATUS INFORMATION, AND CARRIER MEDIUM**

(30) Priority: 03.09.2018 JP 2018164688
(71) Applicant: Ricoh Company, Ltd., Tokyo 143-8555 (JP)
(72) Inventor: SAITO, Tatsuya, Tokyo, 143-8555 (JP); TAKEI, Kazushi, Tokyo, 143-8555 (JP); TAKANE, Toshiaki, Tokyo, 143-8555 (JP); SATOH, Ryuuichi, Tokyo, 143-8555 (JP); NAKAYAMA, Mari, Tokyo, 143-8555 (JP); SAKUMA, Kazunori, Tokyo, 143-8555 (JP); NAKATA, Tetsuyoshi, Tokyo, 143-8555 (JP)
(74) Representative: SSM Sandmair

(57) **Abstract**

An electronic device (10) includes a reception unit (60), a supply unit (61), an execution unit (62), and a notification unit (63). The reception unit (60) receives an instruction of power supply. The supply unit (61) supplies power in response to the instruction of power supply. The execution unit (62) executes an activation program to activate the electronic device (10), in response to the power supplied. The notification unit (63) provides information indicating that activation of the electronic device (10) is complete, in response to a finish of execution of the activation program. The supply unit (61) continues or stops supplying the power depending on whether the reception unit (60) continues receiving the instruction of power supply until the finish of execution of the activation program. The supply unit (61) continues supplying the power after the finish of execution of the activation program.

## Description

### BACKGROUND

### Technical Field

Embodiments of the present disclosure generally relate to an electronic device, a method for providing information, and a carrier medium. In particular, the embodiments of the present disclosure relate to an electronic device that provides information indicating that activation is complete, a method for providing information indicating that activation of an electronic device is complete, and a carrier medium storing computer-readable program code that causes a computer to perform the method for providing information.

### Related Art

As one of electronic devices, there is known a handheld printer omitting a paper conveyance system. The handheld printer applies ink while being manually operated to freely scan on a paper surface (i.e., freehand scanning) (see, for example, JP-2010-520087-A). The handheld printer is downsized to be handled freehand. Such a handheld printer includes an integrated notification unit that provides information indicating the device status.

Instead of a method of fixing a logic of a power holding signal for holding power supply with hardware such as a power switch (SW) or an internal circuit, the handheld printer employs a method of controlling the power holding signal after activation of software of a central processing unit (CPU), thereby reducing cost and simplifying the physical structure of the device. Thus, the handheld printer is downsized.

However, with the method of controlling the power holding signal after the activation of the software, the power holding signal is unable to be controlled until the software is activated. Therefore, a user keeps pressing the power switch until the software is activated, thereby continuing to output the power holding signal.

Typical handheld printers provide information indicating operation statuses such as printing and a printing error. However, the handheld printers, employing the method of controlling the power holding signal after the activation of the software, does not provide information on when to release the power switch. As a consequence, the user may release the power switch before the time for activation elapses. Thus, the user has difficulties in starting the typical handheld printers as intended.

In light of the above-described problems, it is a general object of the present invention to provide an electronic device that enables activation as intended by a user, a method for enabling activation as intended by a user, and a carrier medium storing computer-readable program code that causes a computer to perform the method for enabling activation as intended by a user.

### SUMMARY

In order to achieve the above-mentioned object, there is provided an electronic device according to claim 1. Advantageous embodiments are defined by the dependent claims. Advantageously, the electronic device includes a reception unit, a supply unit, an execution unit, and a notification unit. The reception unit is configured to receive an instruction of power supply. The supply unit is configured to supply power in response to the instruction of power supply. The execution unit is configured to execute an activation program to activate the electronic device, in response to the power supplied. The notification unit is configured to provide information indicating that activation of the electronic device is complete, in response to a finish of execution of the activation program. The supply unit is configured to continue or stop supplying the power depending on whether the reception unit continues receiving the instruction of power supply until the finish of execution of the activation program. The supply unit is configured to continue supplying the power after the finish of execution of the activation program.

Accordingly, the electronic device is activated as intended by a user.

### BRIEF DESCRIPTION OF THE DRAWINGS

A more complete appreciation of the embodiments and many of the attendant advantages and features thereof can be readily obtained and understood from the following detailed description with reference to the accompanying drawings, wherein:
FIG. 1 is a diagram illustrating a configuration of an image forming system including a handheld printer and a smart device;
FIG. 2 is a block diagram illustrating a hardware configuration of the handheld printer;
FIG. 3 is a block diagram illustrating a configuration of a controller included in the handheld printer of FIG. 2;
FIG. 4 is a block diagram illustrating a hardware configuration of the smart device;
FIG. 5 is a flowchart of a process executed by the smart device;
FIG. 6 is a flowchart of a process executed by the handheld printer;
FIG. 7 is a continuation of the flowchart of the process executed by the handheld printer in FIG. 6;
FIG. 8 is a block diagram illustrating a functional configuration of the handheld printer;
FIG. 9A is a top view of a notification unit in the handheld printer;
FIG. 9B is a cross-sectional view of the handheld printer, particularly illustrating the notification unit;
FIG. 10 is a table illustrating an example of control information;
FIG. 11 is a sequence diagram illustrating a first example of an activation process of the handheld printer;
FIG. 12 is a sequence diagram illustrating a second example of the activation process of the handheld printer;
FIG. 13 is a timing chart when the power is turned on and off normally; and
FIG. 14 is a timing chart when the power fails to be turned on normally.

The accompanying drawings are intended to depict embodiments of the present disclosure and should not be interpreted to limit the scope thereof. Also, identical or similar reference numerals designate identical or similar components throughout the several views.

### DETAILED DESCRIPTION

In describing embodiments illustrated in the drawings, specific terminology is employed for the sake of clarity. However, the disclosure of the present specification is not intended to be limited to the specific terminology so selected and it is to be understood that each specific element includes all technical equivalents that have a similar function, operate in a similar manner, and achieve a similar result.

Although the embodiments are described with technical limitations with reference to the attached drawings, such description is not intended to limit the scope of the disclosure and not all of the components or elements described in the embodiments of the present disclosure are indispensable to the present disclosure.

In a later-described comparative example, embodiment, and exemplary variation, for the sake of simplicity like reference numerals are given to identical or corresponding constituent elements such as parts and materials having the same functions, and redundant descriptions thereof are omitted unless otherwise required.

As used herein, the singular forms "a", "an", and "the" are intended to include the plural forms as well, unless the context clearly indicates otherwise.

Referring to the drawings, wherein like reference numerals designate identical or corresponding parts throughout the several views, embodiments of the present disclosure are described below.

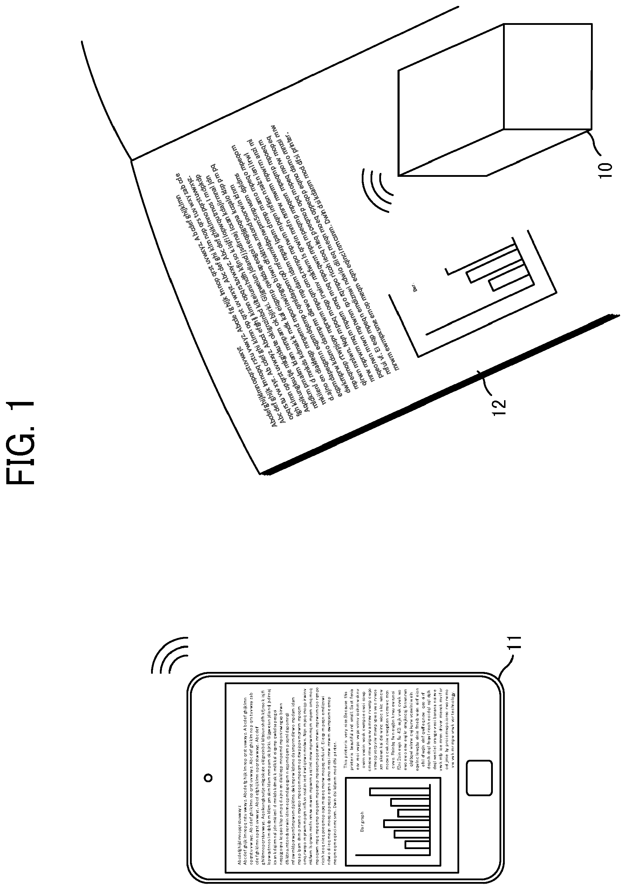

Initially with reference to FIG. 1, a description is given of a communication system including an electronic device and a communication terminal that communicates with the electronic device according to an embodiment of the present disclosure.

FIG. 1 is a diagram illustrating a configuration of an image forming system including a handheld printer 10 and a smart device 11, as an example of the communication system.

The handheld printer 10 and the smart device 11 are herein described as an electronic device and a communication terminal, respectively. Note that the electronic device and the communication terminal are not limited to a handheld printer and a smart device, respectively.

The handheld printer 10 has a size and a weight allowing, e.g., a user to carry the handheld printer 10 by one hand and freely move the handheld printer 10 on a printable medium 12, such as a notebook or standard paper, to print on the medium 12.

The handheld printer 10 may be, but is not limited to, an inkjet printer that discharges droplets of, e.g., ink from a nozzle to print on the medium 12. Alternatively, the handheld printer 10 may be a dot-impact printer that hits a thin pin against an ink ribbon for printing. The handheld printer 10 may be a monochrome printer or a color printer.

The handheld printer 10 receives, as image data, an image to be printed. According to the image data, the handheld printer 10 discharges, e.g., ink on the medium 12, thereby printing the image on the medium 12. The image to be printed may include text alone, or may include figures, pictures, photographs, and the like. The handheld printer 10 receives print setting information together with the image data to form an image according to the print setting information. An example of the print setting information is monochrome/color printing designated.

Through wireless communication such as infrared communication, Bluetooth (registered trademark), or Wi-Fi, the handheld printer 10 receives image data from the smart device 11 that holds the image data. The handheld printer 10 may receive the image data from the smart device 11 directly or indirectly via an access point or the like. Alternatively, the handheld printer 10 may be connected to the smart device 11 via, e.g., a cable to receive the image data through wired communication, instead of the wireless communication.

The smart device 11 is, e.g., a smart phone, a tablet terminal, or a notebook computer. The smart device 11 performs the wireless communication with the handheld printer 10 to transmit the image data, which the smart device 11 holds, to the handheld printer 10. The smart device 11 may also receive image data from another device, such as a server, and transfer the image data thus acquired to the handheld printer 10.

A user, for example, turns on the smart device 11 and activates an application to display an image. When desiring to print the image, the user taps a print start button displayed on a touch panel, for example, thereby instructing the smart device 11 to print the image. In response to the print instruction, the smart device 11 transmits data of the image (i.e., image data) to the handheld printer 10 through the wireless communication.

The handheld printer 10 receives the image data to be printed from the smart device 11. The user holds the handheld printer 10 and freely moves the handheld printer 10 on the medium 12. Meanwhile, the handheld printer 10 calculates a position of each nozzle. In practice, the handheld printer 10 calculates the position of each nozzle as a coordinate position relative to a home or initial position initially determined as a reference.

When the coordinate positions of the nozzles are within a tolerance from coordinate positions of image elements constructing the image of the image data received, the handheld printer 10 transmits print data for printing the image elements to a controller 25 that controls a recording head 27. Specifically, the controller 25 causes the recording head 27 having a plurality of nozzles to discharge ink from the nozzles at the coordinate positions for printing. The handheld printer 10 repeats such an action to print the image on the medium 12.

As illustrated in FIG. 1, the handheld printer 10 is a box-shaped printer having a plurality of nozzles to discharge ink. Although FIG. 1 illustrates the handheld printer 10 as a box, the shape of the handheld printer 10 is not limited to a box. The user presses a surface having the plurality of nozzles of the handheld printer 10 against the medium 12, which is a flat medium, thereby using the handheld printer 10. The plurality of nozzles is arranged such that tips thereof are apart from the surface of the medium 12 when the user presses the handheld printer 10 against the medium 12. Note that the distance from the tips of the nozzles to the medium 12 is predetermined as a distance that allows the nozzles to discharge ink to print images as appropriate. The user presses the surface having the plurality of nozzles of the handheld printer 10 against the medium 12 while freely moving the handheld printer 10 on the medium 12 (i.e., freehand scanning), thereby printing the image on the medium 12.

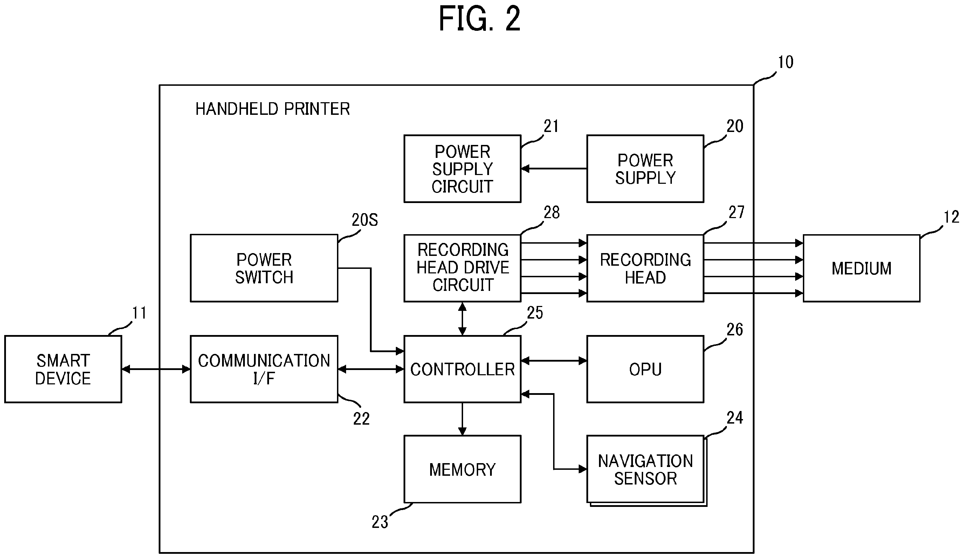

Referring now to FIG. 2, a description is given of a hardware configuration of the handheld printer 10.

FIG. 2 is a block diagram illustrating the hardware configuration of the handheld printer 10.

The handheld printer 10 includes a power supply 20 such as a cell or a battery that supplies power to be used in the handheld printer 10. The handheld printer 10 further includes a power supply circuit 21 that converts the power into power to be used by units such as the controller 25 and a recording head drive circuit 28. The power supply circuit 21 switches between a charging circuit of the battery and an alternating current (AC) power supply, for example. The handheld printer 10 further includes a communication interface (I/F) 22 that receives image data transmitted from the smart device 11.

The handheld printer 10 further includes a memory 23, two or more navigation sensors 24, the controller 25, an operation unit (OPU) 26, the recording head 27, and the recording head drive circuit 28. Hereinafter, the two or more navigation sensors 24 may be simply referred to as a navigation sensor 24. The memory 23 stores, e.g., an activation program, firmware for controlling the hardware of the handheld printer 10, drive waveform data for driving the recording head 27, and initial setting data for performing initial setting of the handheld printer 10. The memory 23 is used as a temporary storage for the image data received by the communication I/F 22. The memory 23 is also used as a work area when the firmware operates.

The two or more navigation sensors 24 are used to calculate positional information of the handheld printer 10 and positional information of the recording head 27. The positional information is coordinate information in a two-dimensional plane. The positional information of the initial position is, e.g., coordinates (0, 0). The two or more navigation sensors 24 calculate and output a moving distance (or moving amount) in a horizontal direction (i.e., X-axis direction) and a vertical direction (i.e., Y-axis direction) specified based on the initial position. The X-axis direction and the Y-axis direction are the horizontal direction and the vertical direction, respectively, from the position of the navigation sensor 24 detecting the initial position. When the navigation sensor 24 is provided in front and back of the plurality of nozzles arranged, the Y-axis direction is the vertical direction in which the navigation sensor 24 and the plurality of nozzles are arranged; whereas the X-axis direction is the horizontal direction perpendicular to the vertical direction (i.e., Y-axis direction). Note that the navigation sensor 24 may detect, e.g., the rotational amount and acceleration of the recording head 27, in addition to the moving amount, to obtain accurate position coordinates. The rotational amount is, e.g., an angle at which a longitudinal direction of the recording head 27 is inclined with respect to the Y axis. Alternatively, the rotational amount may be an angle with respect to the X axis.

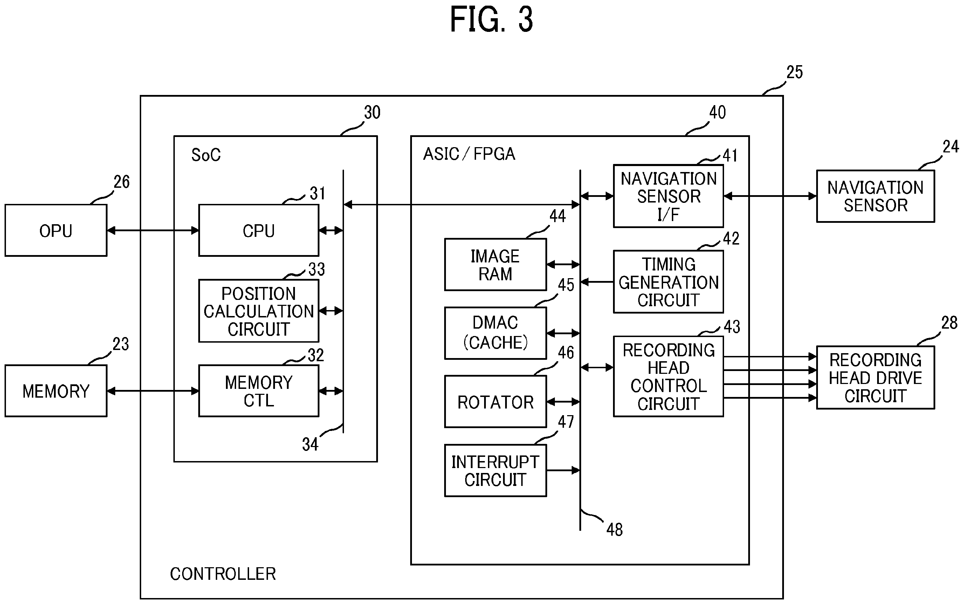

The controller 25 includes a system on chip (SoC) 30 and an application specific integrated circuit / field-programmable gate array (ASIC/FPGA) 40, as illustrated in FIG. 3. A detailed description of the controller 25 is deferred.

The controller 25 generally controls the handheld printer 10. For example, based on the information from the navigation sensor 24, the controller 25 calculates position coordinates of each nozzle of the recording head 27, selects an image element corresponding to the position coordinates of each nozzle of the recording head 27, and determines whether to print.

The OPU 26 is constructed of, e.g., a light emitting diode (LED) and a switch. The LED displays the status of the handheld printer 10. The user gives a print instruction by the switch. The LED and the switch are examples of components of the OPU 26. The OPU 26 may include operation keys, a liquid crystal display (LCD), and the like. In addition, the OPU 26 may be provided with a touch panel.

The recording head 27 includes the plurality of nozzles to discharge ink. In the present example, the plurality of nozzles is arranged in a line at regular intervals along the longitudinal direction of the recording head 27. Alternatively, the plurality of nozzles may be arranged in two or more lines. The recording head 27 may employ a piezoelectric method for applying a voltage and deforming a piezoelectric element to discharge ink. Alternatively, the recording head 27 may employ a thermal method for applying heat to ink to generate bubbles, thereby expelling and discharging the ink.

The recording head drive circuit 28 receives print data for printing and print timing information for instructing the print timing. According to the print timing instructed based on the print timing information, the recording head drive circuit 28 controls the driving of the recording head 27 to discharge ink onto the medium 12 according to the print data. In order to control the driving of the recording head 27, the recording head drive circuit 28 generates the drive waveform data for driving the recording head 27.

When the communication I/F 22 receives a print job (or image data) from the smart device 11, the controller 25 calculates the position of each nozzle of the recording head 27 based on input information from the two or more navigation sensors 24. The image data thus received is stored in the memory 23. The user holds the handheld printer 10 with one hand and performs the freehand scanning on the medium 12. The controller 25 continues calculating the position of each nozzle during the scanning. Then, the controller 25 acquires a peripheral image alone from the memory 23. The peripheral image is an image in a given area corresponding to the position thus calculated.

The controller 25 compares the positions of the image elements forming the peripheral images thus acquired with the calculated positions of the nozzles. When determining that one or more nozzles are within the tolerance, the controller 25 transmits the print data for the one or more nozzles to the recording head drive circuit 28. The recording head drive circuit 28 generates the drive waveform data of the recording head 27. The recording head 27 discharges ink from the one or more nozzles according to the drive waveform data, thereby printing.

Referring now to FIG. 3, a detailed description is given of a configuration and functions of the controller 25 included in the handheld printer 10 described above.

FIG. 3 is a block diagram illustrating the configuration of the controller 25.

As described above, the controller 25 includes the SoC 30 and the ASIC/FPGA 40. The SoC 30 includes a CPU 31, a memory controller (CTL) 32, and a position calculation circuit 33. The CPU 31 generally controls the handheld printer 10. The memory CTL 32 controls the memory 23. The position calculation circuit 33 calculates the position of the navigation sensor 24 and the position of each nozzle. The CPU 31, the memory CTL 32, and the position calculation circuit 33 are connected to the bus 34 to exchange, e.g., data via the bus 34.

The ASIC/FPGA 40 includes a navigation sensor I/F 41, a timing generation circuit 42, a recording head control circuit 43, an image random-access memory (RAM) 44, a direct memory access controller (DMAC) 45, a rotator 46, and an interrupt circuit 47. The navigation sensor I/F 41, the timing generation circuit 42, the recording head control circuit 43, the image RAM 44, the DMAC 45, the rotator 46, and the interrupt circuit 47 are connected to a bus 48 to exchange, e.g., data via the bus 48. Note that the bus 48 is connected to the bus 34, allowing the SoC 30 and the ASIC/FPGA 40 to exchange, e.g., data via the buses 34 and 48.

The navigation sensor I/F 41 communicates with the navigation sensor 24. The navigation sensor I/F 41 receives output values dX and dY from the navigation sensor 24 and stores the output values dX and dY in an internal register as an internal memory. The timing generation circuit 42 generates information of the time at which the navigation sensor 24 emits light and acquires reflected light from the medium 12 as image data. The timing generation circuit 42 notifies the navigation sensor I/F 41 of the information. In short, the timing generation circuit 42 instructs the timing of reading the medium 12. The timing generation circuit 42 also generates information of the timing of driving the recording head 27 and notifies the recording head control circuit 43 of the information. In short, the timing generation circuit 42 instructs the timing of discharging ink from the plurality of nozzles for printing.

The DMAC 45 reads, from the memory 23, image data of the peripheral image of each nozzle of the recording head 27 based on the positional information calculated by the position calculation circuit 33. The image RAM 44 temporarily stores the image data of the peripheral image read by the DMAC 45. The rotator 46 rotates the peripheral image according to the tilt and the head position designated by the user. The rotator 46 outputs the peripheral image thus rotated to the recording head control circuit 43. The rotator 46 acquires, e.g., the rotational angle that the position calculation circuit 33 calculates upon calculation of the position coordinates. By use of the rotational angle, the rotator 46 rotates the peripheral image.

The recording head control circuit 43 generates a control signal from the information of the timing of driving the recording head 27 and receives the image data of the peripheral image output from the rotator 46 to determine the nozzles to discharge ink. According to the determination and the information of the timing, the recording head control circuit 43 outputs, to the recording head drive circuit 28, the print data and information of the nozzles that discharge ink.

The interrupt circuit 47 notifies the SoC 30 that the navigation sensor I/F 41 terminates communication with the navigation sensor 24. The interrupt circuit 47 also notifies the SoC 30 of status information such as an error.

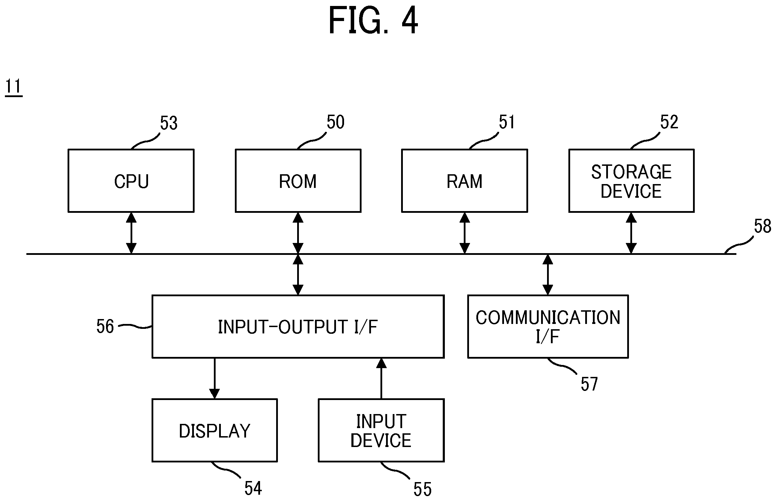

Referring now to FIG. 4, a description is given of a hardware configuration of the smart device 11.

FIG. 4 is a block diagram illustrating the hardware configuration of the smart device 11.

The smart device 11 includes a read-only memory (ROM) 50 and a RAM 51. The ROM 50 stores, e.g., an activation program and firmware. The RAM 51 serves as a working space. The smart device 11 further includes a readable/writable storage device 52, such as a flash memory, which stores image data, an application for opening the image data and instructing printing, an operating system (OS), and the like.

The smart device 11 further includes a CPU 53, a display 54, and an input device 55. The CPU 53 executes, e.g., the activation program stored in the ROM 50 and the application stored in the storage device 52. The display 54 displays an image. A user, for example, inputs a print instruction of the image with the input device 55. In the present example, the display 54 and the input device 55 are provided as separate devices. Alternatively, a touch panel may be provided with functions of the display 54 and the input device 55. The display 54 and the input device 55 are connected to an input-output I/F 56, which controls display and input of information.

The smart device 11 further includes a communication I/F 57 for wireless communication with the handheld printer 10. The ROM 50, the RAM 51, the storage device 52, the CPU 53, the input-output I/F 56, and the communication I/F 57 are connected to a bus 58 to exchange, e.g., data with each other via the bus 58.

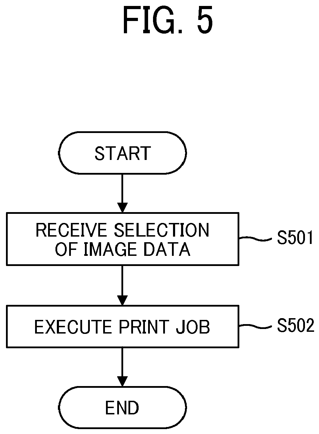

Referring now to FIGS. 5 to 7, a description is given of processes executed by the smart device 11 and the handheld printer 10.

Initially with reference to FIG. 5, a description is given of the process executed by the smart device 11.

FIG. 5 is a flowchart of the process executed by the smart device 11.

When a user presses a power switch (SW) of the smart device 11, the smart device 11 accepts that the power switch is pressed. In other words, the smart device 11 is supplied with power from, e.g., a cell or a battery and activated to start the process.

In step S501, the smart device 11 displays a plurality of pieces of image data and receives a selection of image data to be printed.

In step S502, the smart device 11 converts the image data selected into print data with an application or a printer driver installed in the smart device 11 to transmit the converted data to the handheld printer 10, thereby executing a print job. Alternatively, the smart device 11 may transmit, to the handheld printer 10, the image data as is in a data format such as a tagged image file format (TIFF) or Joint Photographic Expert Group (JPEG), thereby executing the print job.

After executing the print job, the smart device 11 ends the process.

The user determines the initial position of the handheld printer 10 on the medium 12 and presses the print start button of the handheld printer 10. Thereafter, the user performs the freehand scanning on the medium 12 to form an image.

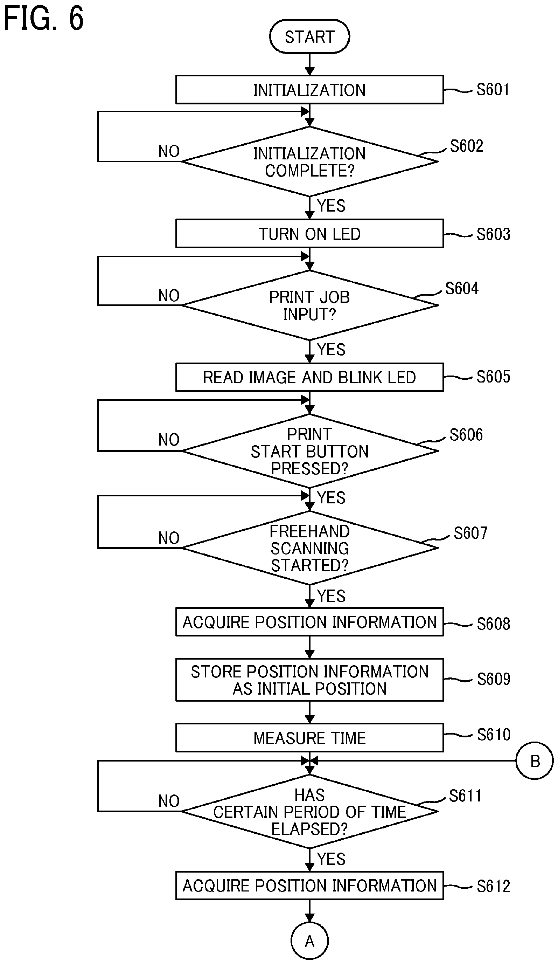

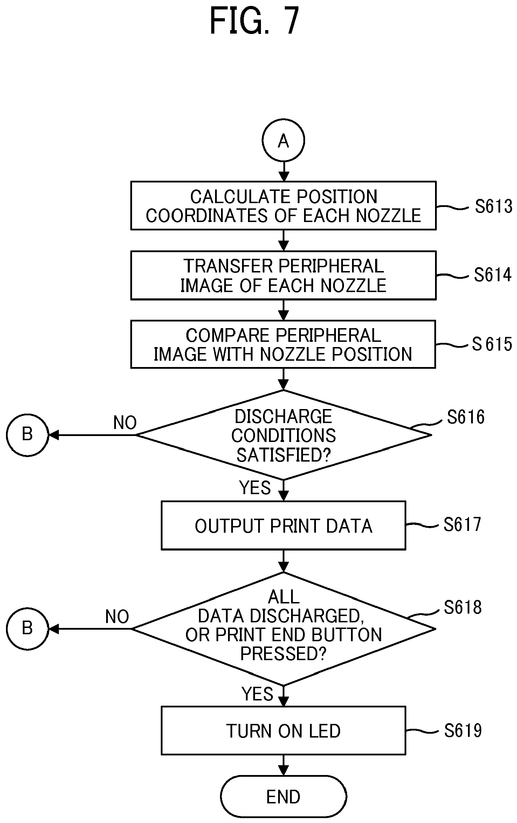

Referring now to FIGS. 6 and 7, a description is given of the process executed by the handheld printer 10.

FIG. 6 is a flowchart of the process executed by the handheld printer 10. FIG. 7 is a continuation of the flowchart of the process executed by the handheld printer 10 in FIG. 6.

When a user presses a power switch 20S of the handheld printer 10, the handheld printer 10 accepts that the power switch 20S is pressed. The handheld printer 10 is supplied with power from, e.g., a cell or a battery and activated to start the process.

In step S601, the SoC 30 initializes the handheld printer 10. In the initialization, the navigation sensor 24 and the circuits are activated.

In step S602, the controller 25 determines whether the initialization is complete. When the initialization is not complete (NO in step S602), the controller 25 waits for the initialization to be complete. On the other hand, when the initialization is complete (YES in step S602), the process proceeds to step S603.

In step S603, the SoC 30 turns on the LED, thereby notifying the user that the handheld printer 10 is ready to print.

In step 604, the SoC 30 determines whether the print job is input from the smart device 11. In other words, the SoC 30 determines whether print data or image data is received from the smart device 11. When the print job is not received (NO in step S604), the SoC 30 determines again whether the print job is input from the smart device 11. The determination is repeated until the print job is received. On the other hand, when the print job is received (YES in step S604), the process proceeds to step S605.

In step S605, the handheld printer 10 reads an image of the image data and blinks the LED. When print data is received as the print job, the handheld printer 10 generates the image by rendering and blinks the LED. The blinking notifies the user that the image is input.

In step S606, the controller 25 determines whether the print start button is pressed by the user. When the print start button is not pressed (NO in step S606), the controller 25 waits for the print start button to be pressed. On the other hand, when the print start button is pressed (YES in step S606), the process proceeds to step S607.

In step S607, the controller 25 determines whether the freehand scanning is started. When the freehand scanning is not started (NO in step S607), the controller 25 waits for the freehand scanning to be started. When the freehand scanning is started (YES in step S607), the navigation sensor 24 detects the current position of the handheld printer 10 as a start position.

In step S608, the SoC 30 acquires, via the navigation sensor I/F 41, positional information of the start position thus detected.

In step S609, the SoC 30 stores, in the internal memory, the positional information as an initial position.

In step S610, the time is measured with a counter of the timing generation circuit 42 provided in the handheld printer 10.

In step S611, the controller 25 determines whether a certain period of time has elapsed. When the certain period of time has not elapsed (NO in step S611), the controller 25 waits for the certain period of time to elapse. On the other hand, when the certain period of time has elapsed and reached a time to detect the current position (YES in step S611), the process proceeds to step S612.

In step S612, the navigation sensor 24 detects the current position. Similar to the positional information of the start position, the SoC 30 acquires and stores the positional information of the detected position in the internal memory.

The navigation sensor 24 of the handheld printer 10 detects the initial position designated by the user. Subsequently, the navigation sensor 24 performs automatic reading and calculates the moving amount. The navigation sensor 24 then outputs, as a sensor output value, the moving amount calculated at certain time intervals. The sensor output value is stored in the internal memory as described above. The position calculation circuit 33 calculates the rotational angle and the position of the recording head 27, based on the sensor output value thus stored. The position calculation circuit 33 calculates the position of the recording head 27 as two-dimensional position coordinates. The position calculation circuit 33 then notifies the ASIC/FPGA 40 of the rotational angle and the position of the recording head 27 thus calculated.

In step S613 illustrated in FIG. 7, the ASIC/FPGA 40 calculates the position coordinates of each nozzle from the rotational angle and the position coordinates of the recording head 27 calculated.

In step S614, the image data of the peripheral image is transferred from the memory 23 to the image RAM 44, based on the position coordinates of each nozzle. Then, the rotator 46 rotates the image in the image data according to the position and the tilt of the recording head 27 designated by the user.

In step S615, the ASIC/FPGA 40 compares the positions of the image elements forming the peripheral images with the positions of the nozzles calculated, by use of the image data transferred.

In step S616, the ASIC/FPGA 40 determines whether the discharge conditions are satisfied. Specifically, based on whether the position of each nozzle is within the tolerance of position coordinates of each image element, the ASIC/FPGA 40 determines whether the discharge conditions are satisfied. When the discharge conditions are not satisfied (NO in step S616), the process returns to step S611. On the other hand, when the discharge conditions are satisfied (YES in step S616), the process proceeds to step S617.

In step S617, the print data of the corresponding image element is output to the recording head control circuit 43 to cause the recording head 27 to discharge the ink.

In step S618, the controller 25 determines whether all data is discharged or whether a print end button is pressed. When the discharging of all data is not complete or when the print end button is not pressed (NO in step S618), the process returns to step S611. On the other hand, when the discharging of all data is complete or when the print end button is pressed (YES in step S618), the process proceeds to step S619.

In step S619, the SoC 30 turns on the LED to notify the user that the printing is complete. Thus, the process of the handheld printer 10 ends.

When determining that discharging not all the data is sufficient, the user may press the print end button to complete the printing. In the process described above, the SoC 30 and the ASIC/FPGA40 have different roles. For example, the SoC 30 receives the print job, calculates the rotational angle and the position of the recording head 27, and turns on the LED. On the other hand, the ASIC/FPGA 40 calculates the position coordinates of each nozzle and determines whether the discharge conditions are satisfied. The roles of the SoC 30 and the ASIC/FPGA 40 are not limited thereto. The separation of the roles may change depending on, e.g., the CPU performance or the circuit size of the ASIC/FPGA 40. For example, the SoC 30 may perform the steps to the step of calculating the position coordinates of each nozzle. As another example, the ASIC/FPGA 40 may perform the steps from the step of calculating the rotational angle and the position of the recording head 27.

The hardware configuration and the entire process of the handheld printer 10 are as described above.

Now, a detailed description is given of a functional configuration for providing information indicating that activation is complete and examples of activation process.

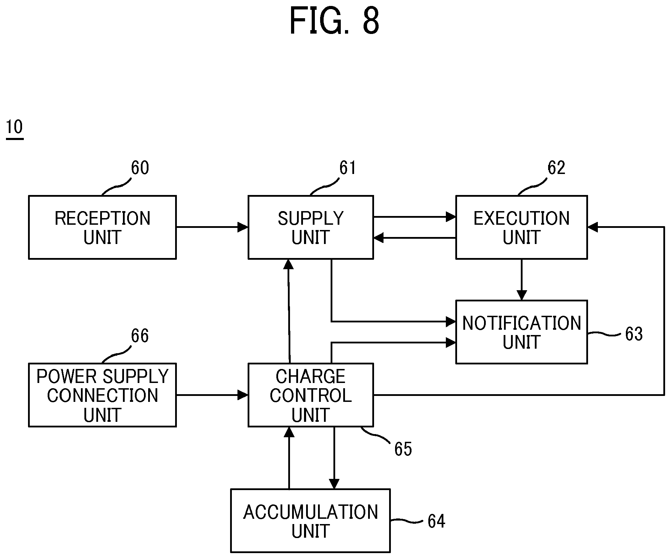

FIG. 8 is a block diagram illustrating a functional configuration of the handheld printer 10.

The handheld printer 10 includes at least a reception unit 60, a supply unit 61, an execution unit 62, and a notification unit 63. Each of these functional units is implemented by the controller 25 executing a program stored in the memory 23, for example. In the present example, the handheld printer 10 further includes an accumulation unit 64, a charge control unit 65, and a power supply connection unit 66. The accumulation unit 64 is implemented by the power supply 20 as an accumulator. The charge control unit 65 and the power supply connection unit 66 are implemented by the power supply circuit 21.

The reception unit 60 receives an instruction of power supply by the power switch (SW) 20S being pressed. Examples of the power switch 20S include, but are not limited to, a push-button that moves vertically with respect to a surface on which the power switch 20S is provided and a slide switch that moves horizontally with respect to the surface on which the power switch 20S is provided. Alternatively, the power switch 20S may move in an oblique direction or rotate in a given direction. The reception unit 60 continuously receives, or continues receiving, the instruction of power supply while the user presses (or holds down) the power switch 20S for a given period of time. By contrast, when the user stops pressing the power switch 20S during the given period of time, the reception unit 60 no longer receives the instruction of power supply. Note that, the given period of time is a period of time from when the power supply to the execution unit 62 is started until when the execution of the activation program finishes.

The supply unit 61 supplies power from the accumulation unit 64 such as a battery in response to the reception unit 60 receiving the instruction of power supply. When a power cable is connected to the power supply connection unit 66, such as an outlet for connection to a power source, the charge control unit 65 causes the accumulation unit 64 to start accumulating power supplied through the power cable. Meanwhile, the charge control unit 65 requests the notification unit 63 to provide information indicating that charging is in progress while the accumulation unit 64 accumulates the power.

In response to power supplied from the supply unit 61, the execution unit 62 executes the activation program to activate the handheld printer 10. When the execution of the activation program finishes, the execution unit 62 requests the notification unit 63 to provide information indicating that the activation of the handheld printer 10 is complete.

The notification unit 63 is implemented by at least one of a visual notification unit or a visual notification device, such as a display or a light emitter, and an auditory notification unit or an auditory notification device, such as a sound output device. Note that, by at least one of the visual notification unit and the auditory notification unit, the notification unit 63 notifies the user that the charging is in progress and that the activation is complete, for example. Examples of information provided by the notification unit 63 herein include information indicating that the charging is in progress and information indicating that the activation is complete. The notification unit 63 may provide other information such as error information. In the present example, the notification unit 63 is implemented by a light emitter as a visual notification unit.

Specifically, for example, the notification unit 63 is implemented by a single-color light emitter and a multi-color light emitter arranged side by side below a single display window. In response to a request for providing the information indicating that the charging is in progress, the single-color light emitter emits light. In response to a request for providing the information indicating that the activation is complete, the multi-color light emitter emits light.

The supply unit 61 continues or stops supplying the power depending on whether the reception unit 60 continues receiving the instruction of power supply until the execution of the activation program finishes. That is, the supply unit 61 continues supplying the power when the reception unit 60 continues receiving the instruction. By contrast, when the reception unit 60 no longer receives the instruction, the supply unit 61 stops supplying the power. After the execution of the activation program finishes, the supply unit 61 continues supplying the power regardless of whether the reception unit 60 continues receiving the instruction of power supply.

The notification unit 63 provide the information indicating that the charging is in progress and the information indicating that the activation is complete, by both the single-color light emitter and the multi-color light emitter emitting light. However, when the single-color light emitter and the multi-color light emitter emit light together, the light passes outwards through the same display window, mixing the light colors. As a consequence, the user has difficulties in determining whether the information provided is either or both of the information indicating that the charging is in progress and the information indicating that the activation is complete.

To address such a situation, at the time when the reception unit 60 receives the instruction of power supply, the supply unit 61 starts supplying the power to the execution unit 62 and requests the notification unit 63 to stop providing the information indicating that the charging is in progress. In other words, the supply unit 61 requests the single-color emitter emitting light to stop lighting. Accordingly, the user easily determines which information is provided.

The single-color light emitter emits, e.g., green light during charging. On the other hand, when the activation is complete, the multi-color light emitter emits, e.g., blue light, which is different in color from the light emitted by the single-color light emitter. The colors of light emitted by the single-color light emitter and the multi-color light emitter are not limited to green and blue, respectively. The single-color light emitter and the multi-color light emitter may emit light of other colors. Alternatively, the single-color light emitter and the multi-color light emitter may emit identical color light when the single-color light emitter stops emitting light and then the multi-color light emitter emits light to provide the information indicating that the activation is complete.

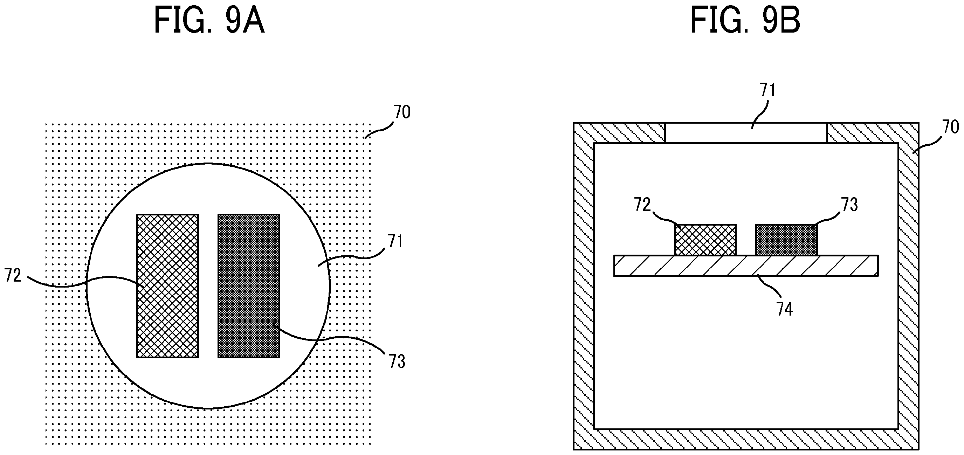

Referring now to FIGS. 9A and 9B, a description is given of a configuration of the notification unit 63 in the handheld printer 10.

The notification unit 63 is implemented by a display window 71, a single-color light emitter 72, and a multi-color light emitter 73. The display window 71 is provided as a part of a housing or exterior 70 of the handheld printer 10. The single-color light emitter 72 and the multi-color light emitter 73 are arranged side by side below the display window 71.

FIG. 9A is a top view of the notification unit 63, as seen through the display window 71. FIG. 9B is a cross-sectional view of the handheld printer 10, particularly illustrating the notification unit 63, taken along the display window 71.

The exterior 70 of the handheld printer 10 does not transmit light; whereas the display window 71 alone transmits light. That is, the light from the single-color light emitter 72 and the light from the multi-color light emitter 73 are emitted to the outside through the display window 71 alone, reaching the user.

The single-color light emitter 72 is a single LED while the multi-color light emitter 73 is constructed of two or more LEDs, for example. The single-color light emitter 72 as a single LED is capable of emitting light of red, green, or blue. The multi-color light emitter 73 constructed of two or more LEDs is capable of emitting light of red, green, blue, and other colors such as yellow and purple. The configurations of the single-color light emitter 72 and the multi-color light emitter 73 described above are examples. The single-color light emitter 72 and the multi-color light emitter 73 may be inorganic electroluminescent (EL) devices. The single-color light emitter 72 as a single LED or the multi-color light emitter 73 constructed of two or more of LEDs is used to provide information indicating that the handheld printer 10 is ready for printing as described above, for example.

The single-color light emitter 72 and the multi-color light emitter 73 are mounted on a circuit board 74 on which, e.g., a CPU, a ROM, and a RAM are mounted, to emit light upward from the circuit board 74. The light from the single-color light emitter 72 and the light from the multi-color light emitter 73 pass through the display window 71, which is a light transmissive window provided above the circuit board 74, thus being emitted outwards. In the present example, the single-color light emitter 72 and the multi-color light emitter 73 are mounted on the circuit board 74 on which, e.g., the CPU is mounted. Alternatively, the single-color light emitter 72 and the multi-color light emitter 73 may be mounted on a small board that is provided separately.

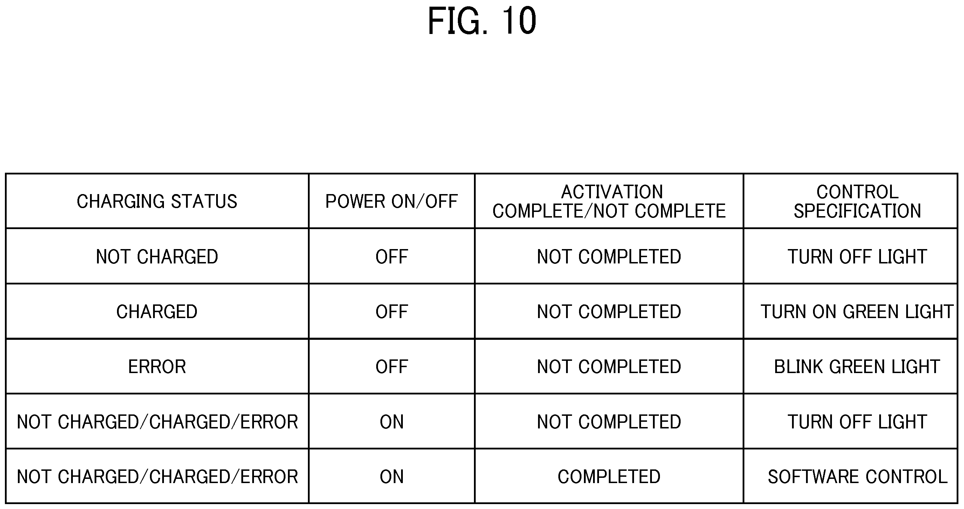

When the supply unit 61 supplies the power, when the execution unit 62 executes the activation program, and when the charge control unit 65 controls the charging, the supply unit 61, the execution unit 62, and the charge control unit 65 refer to a table illustrated in FIG. 10 for the control and notification.

FIG. 10 is a table illustrating an example of control information to which the supply unit 61, the execution unit 62, and the charge control unit 65 refer.

The table illustrated in FIG. 10 includes information of the charging status, power status (i.e., power ON/OFF), whether the execution of the activation program finishes (i.e., activation complete/not complete), and a control specification. The charging status indicates "charged", "not charged", and "error". The "error" indicates that an error occurs in charging. Specifically, for example, when the charging stops or when the accumulation unit 64 exceeds a given temperature, the charging status becomes "error". In other situations, the charging is in a normal state.

The control specification describes control details as to how to control. Examples of the control specification include "turn off light", "turn on green light", "blink green light", and "software control". The "software control" is control that is executed by software after the execution unit 62 finishes the execution of the activation program.

Specifically, when the handheld printer 10 is not charged, when the power of the handheld printer 10 is off, and when the execution of the activation program is not complete, both the single-color light emitter 72 and the multi-color light emitter 73 are turned off.

When the power of the handheld printer 10 is off, when the execution of the activation program is not complete, and when the charging is in progress in the normal state, the single-color light emitter 72 is lit in green.

When the power of the handheld printer 10 is off, when the execution of the activation program is not complete, and when an error occurs in charging, the single-color light emitter 72 blinks in green.

Regardless of the charging status, when the power of the handheld printer 10 is turned on while the execution of the activation program is not complete, both the single-color light emitter 72 and the multi-color light emitter 73 are turned off.

Regardless of the charging status, when the power of the handheld printer 10 is turned on while the execution of the activation program is complete, the multi-color light emitter 73 is lit in blue, for example, by the software control.

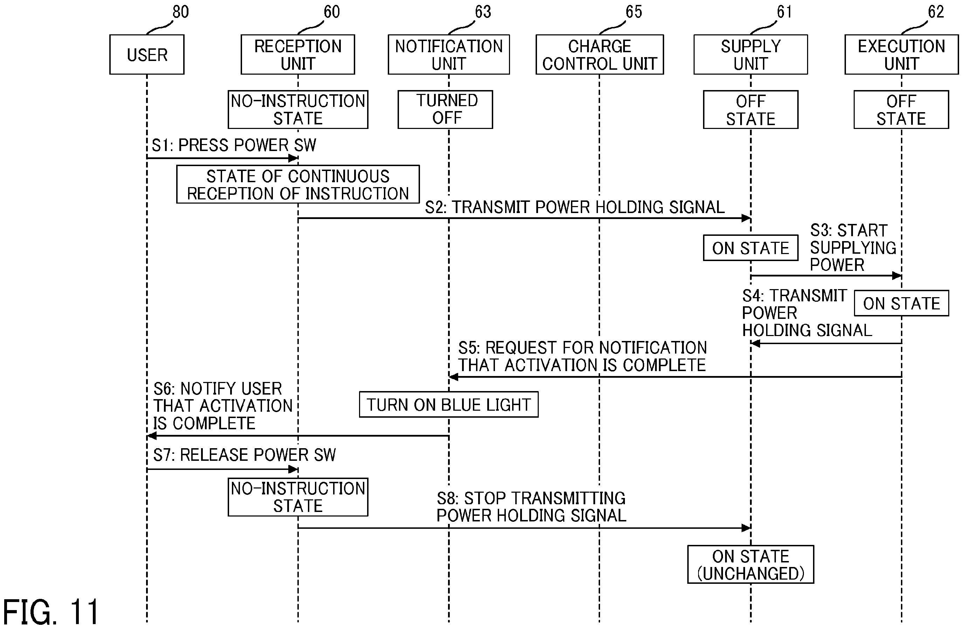

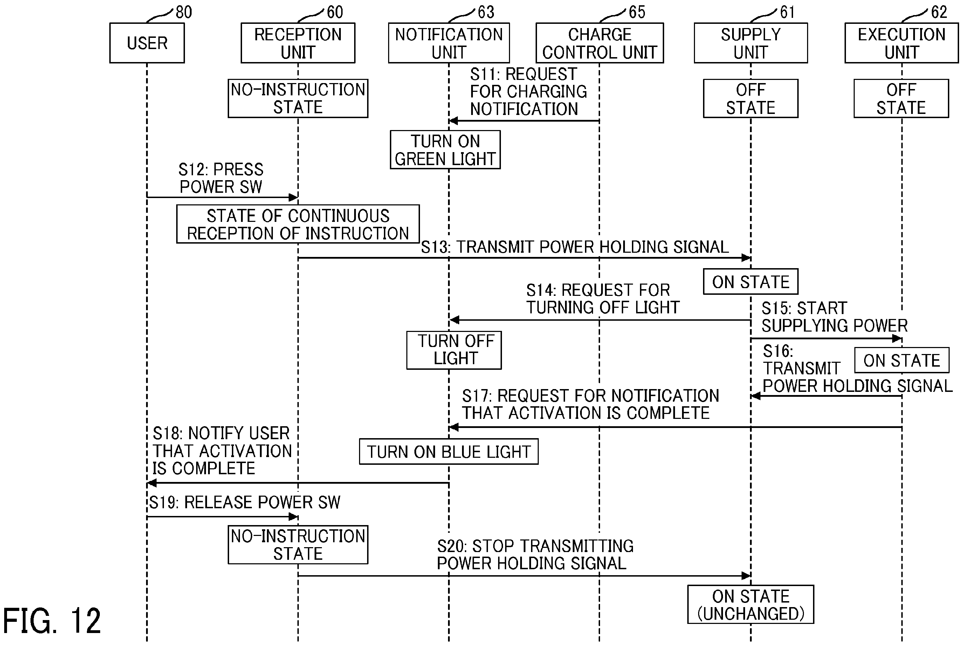

Referring now to FIGS. 11 and 12, a detailed description is given of flows of activation processes of the handheld printer 10.

FIG. 11 is a sequence diagram illustrating an activation process executed when the handheld printer 10 is not charged. FIG. 12 is a sequence diagram illustrating an activation process executed during charging.

Initially with reference to FIG. 11, a description is given of the activation process executed when the handheld printer 10 is not charged.

In the handheld printer 10, until the power is turned on, the reception unit 60 is in a state in which the reception unit 60 does not receive an instruction (i.e., no-instruction state) while the notification unit 63 is in a state in which the light is turned off. Relatedly, the supply unit 61 is in a state in which the supply unit 61 stops supplying the power (i.e., OFF state) while the execution unit 62 is in a state in which the execution unit 62 is inactive (i.e., OFF state).

A user 80 presses the power switch 20S of the handheld printer 10 to turn on the power, thereby causing the reception unit 60 to receive an instruction of power supply (S1). While the user 80 keeps pressing the power switch 20S, the reception unit 60 continues receiving the instruction (i.e., state of continuous reception of instruction).

The reception unit 60 transmits a power holding signal to the supply unit 61, thereby notifying the supply unit 61 that the reception unit 60 has received the instruction (S2).

In response to the power holding signal, the supply unit 61 comes into an ON state and starts supplying power to the execution unit 62 (S3). In response to the power supplied from the supply unit 61, the execution unit 62 comes into the ON state and executes the activation program. When the execution finishes, the activation of the handheld printer 10 is complete.

When the activation is complete, the execution unit 62 transmits the power holding signal to the supply unit 61 (S4).

On the other hand, the execution unit 62 requests the notification unit 63 to provide the information indicating that the activation is complete (S5).

In response to the request from the execution unit 62, the notification unit 63 turns on the multi-color light emitter 73, for example, thereby notifying the user 80 that the activation is complete (S6).

Note that the order may be changed between the step in which the execution unit 62 transmits the power holding signal to the supply unit 61 and the steps in which the execution unit 62 instructs the notification unit 63 and the notification unit 63 notifies the user 80 that the activation is complete, provided that the execution unit 62 transmits the power holding signal before the user 80 releases the power switch 20S and the reception unit 60 no longer receives the instruction. Otherwise, the power supply stops.

The user 80 notices that the activation is complete by, e.g., the lighting of the multi-color light emitter 73, and releases the power switch 20S (S7).

When the user 80 releases the power switch 20S and the reception unit 60 no longer receives the instruction, the reception unit 60 comes into the no-instruction state. The reception unit 60 stops transmitting the power holding signal to the supply unit 61 (S8).

Although the supply unit 61 receives the stop of the transmission of the power holding signal from the reception unit 60, the supply unit 61 continues supplying the power to the execution unit 62 in response to the power holding signal from the execution unit 62. That is, the supply unit 61 maintains the ON state. The ON state continues until the power switch 20S is pressed again, for example, and a shutdown sequence ends. The shutdown sequence is a process of finishing an operation of the handheld printer 10.

Referring now to FIG. 12, a description is given of the activation process executed when the handheld printer 10 is charged.

In the handheld printer 10, until the power is turned on, the reception unit 60 is in the no-instruction state while the supply unit 61 and the execution unit 62 are in the OFF state. When the handheld printer 10 is charged, the charge control unit 65 starts charging in response to the connection of the power cable to the power supply connection unit 66, while requesting the notification unit 63 to provide the information indicating that the charging is in progress (S11).

The notification unit 63 turns on the single-color light emitter 72, for example, thereby notifying the user 80 that the charging is in progress.

When the user 80 presses the power switch 20S of the handheld printer 10 to turn on the power, the reception unit 60 receives an instruction of power supply (S12). While the user 80 keeps pressing the power switch 20S, the reception unit 60 continues receiving the instruction (i.e., state of continuous reception of instruction).

The reception unit 60 transmits a power holding signal to the supply unit 61, thereby notifying the supply unit 61 that the reception unit 60 has received the instruction (S13).

In response to the power holding signal, the supply unit 61 comes into the ON state and requests the notification unit 63 to turn off the single-color light emitter 72 (S14), thereby causing the notification unit 63 to stop notification for the user 80. On the hand, in response to the power holding signal, the supply unit 61 starts supplying power to the execution unit 62 (S15).

Steps S14 and S15 may be executed at once. Alternatively, the step S14 may follow the step S15.

In response to the power supplied from the supply unit 61, the execution unit 62 comes into the ON state and executes the activation program. When the execution finishes, the activation of the handheld printer 10 is complete. When the activation is complete, the execution unit 62 transmits the power holding signal to the supply unit 61 (S16).

On the other hand, the execution unit 62 requests the notification unit 63 to provide the information indicating that the activation is complete (S17).

In response to the request from the execution unit 62, the notification unit 63 turns on the multi-color light emitter 73, for example, thereby notifying the user 80 that the activation is complete (S18). Note that the order may be changed between the step in which the execution unit 62 transmits the power holding signal to the supply unit 61 and the steps in which the execution unit 62 instructs the notification unit 63 and the notification unit 63 notifies the user 80 that the activation is complete, provided that the execution unit 62 transmits the power holding signal before the user 80 releases the power switch 20S and the reception unit 60 no longer receives the instruction. Otherwise, the power supply stops.

The user 80 notices that the activation is complete by, e.g., the lighting of the multi-color light emitter 73, and releases the power switch 20S (S19).

When the user 80 releases the power switch 20S and the reception unit 60 no longer receives the instruction, the reception unit 60 comes into the no-instruction state. The reception unit 60 stops transmitting the power holding signal to the supply unit 61 (S20).

Although the supply unit 61 receives the stop of the transmission of the power holding signal from the reception unit 60, the supply unit 61 continues supplying the power to the execution unit 62 in response to the power holding signal from the execution unit 62. That is, the supply unit 61 maintains the ON state. The ON state continues until the power switch 20S is pressed again, for example, and the shutdown sequence of the handheld printer 10 ends.

As described above with reference to FIGS. 11 and 12, the handheld printer 10 is activated.

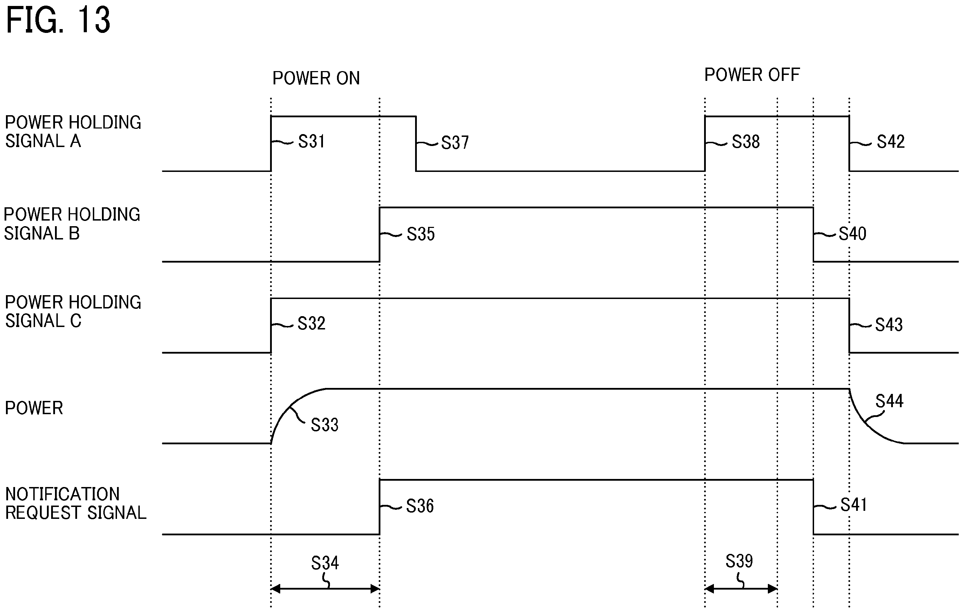

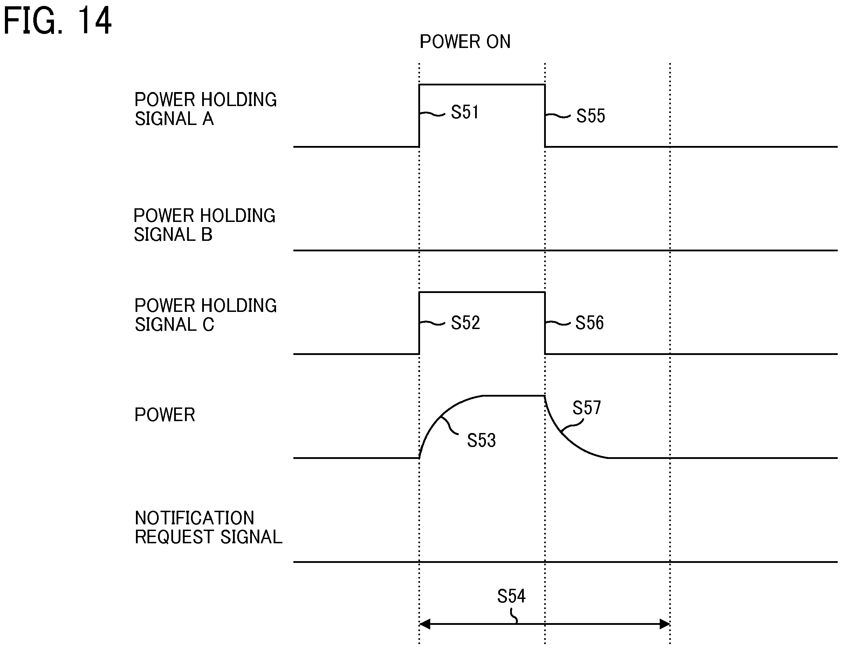

Referring now to FIGS. 13 and 14, a description is given of timings of the transmission and input of the power holding signals, the power rise, and the transmission of a signal instructing the notification.

FIG. 13 is a timing chart when the power is turned on and off normally. FIG. 14 is a timing chart when the power fails to be turned on normally.

Initially with reference to FIG. 13, a description is given of a case in which the power is turned on and off normally.

FIG. 13 illustrates square waves of a power holding signal A as a power holding signal transmitted when the power switch 20S is pressed, the power holding signal B as a power holding signal that the execution unit 62 outputs to the supply unit 61, the power holding signal C as a power holding signal that is input to the supply unit 61, a power rise, and a signal that requests notification (i.e., notification request signal). In the present example, the square waves indicate a positive logic case in which a high voltage state is 1 and a low voltage state is 0. Alternatively, however, the square waves may indicate a negative logic case in which a high voltage state is 0 and a low voltage is 1.

A user, for example, presses the power switch 20S of the handheld printer 10 to turn on the power. In response to the power-on, in the handheld printer 10, the reception unit 60 receives an instruction of power supply and transmits the power holding signal to the supply unit 61 (S31).

The power holding signal thus transmitted is input to the supply unit 61 (S32).

The supply unit 61 starts supplying power to the execution unit 62 (S33).

When the user keeps pressing the power switch 20S during a period of time (S34) from when the supply unit 61 starts supplying the power to the execution unit 62 until when the execution unit 62 finishes execution of the activation program, the activation is complete and the execution unit 62 outputs the power holding signal (S35).

The execution unit 62 transmits, to the notification unit 63, the signal that requests the notification unit 63 to provide the information indicating that the activation is complete (S36).

In response to the request, the notification unit 63 causes the multi-color light emitter 73 to emit light, thereby notifying the user that the activation is complete.

The user sees the light emission of the multi-color light emitter 73 and notices that the activation is complete. The user releases the power switch 20S that has been held down (S37).

Even when the user releases the power switch 20S, the power supply is continued because the execution unit 62 outputs the power holding signal as indicated by S35 in FIG. 13.

Similar to turning on the power, the user presses the power switch 20S to turn off the power. That is, when the power switch 20S is pressed after the activation of the handheld printer 10 is complete, the power is turned off. In response to the power switch 20S being pressed, the reception unit 60 receives an instruction of stopping the power supply and transmits the power holding signal to the supply unit 61 (S38).

The execution unit 62 detects that the power switch 20S is pressed for a given period of time (S39).

The execution unit 62 then executes the shutdown sequence. After the shutdown sequence ends, the execution unit 62 stops outputting the power holding signal (S40).

Pressing the power switch 20S for the given period of time prevents unintended shutdown that may occur when the user presses the power switch 20S by mistake.

The execution unit 62 also stops outputting the signal that requests the notification unit 63 to provide the information indicating that the activation is complete (S41). In response to the request, the notification unit 63 turns off the multi-color light emitter 73, thereby notifying the user that the shutdown is complete.

At this time, the output of the power holding signal from the execution unit 62 stops while the output of the power holding signal from the reception unit 60 continues as the user presses the power switch 20S. Accordingly, the supply unit 61 continues supplying the power to the execution unit 62.

The user sees that the multi-color light emitter 73 is turned off and notices that the shutdown is complete. Then, the user releases the power switch 20S that has been held down. In response to the power switch 20S being released, the reception unit 60 stops transmitting the power holding signal (S42).

As the reception unit 60 stops transmitting the power holding signal, the power holding signal is no longer input to the supply unit 61 (S43).

As a consequence, the power supply from the supply unit 61 to the execution unit 62 stops (S44).

Referring now to FIG. 14, a description is given of a case in which the power fails to be turned on normally.

Similar to FIG. 13, FIG. 14 illustrates square waves of the power holding signal A as a power holding signal transmitted when the power switch 20S is pressed, the power holding signal B as a power holding signal that the execution unit 62 outputs to the supply unit 61, the power holding signal C as a power holding signal that is input to the supply unit 61, the power rise, and the signal that requests notification (i.e., notification request signal). In the present example, the square waves indicate a positive logic case in which a high voltage state is 1 and a low voltage state is 0. Alternatively, however, the square waves may indicate a negative logic case in which a high voltage state is 0 and a low voltage is 1.

A user, for example, presses the power switch 20S of the handheld printer 10 to turn on the power. In response to the power-on, in the handheld printer 10, the reception unit 60 receives an instruction of power supply and transmits the power holding signal to the supply unit 61 (S51).

The power holding signal thus transmitted is input to the supply unit 61 (S52).

The supply unit 61 starts supplying power to the execution unit 62 (S53).

When the user presses the power switch 20S during a period of time shorter than a period of time (S54) from when the supply unit 61 starts supplying the power to the execution unit 62 until when the execution unit 62 finishes the execution of the activation program, the reception unit 60 stops transmitting the power holding signal before the activation is complete (S55).

That is, the input of the power holding signal to the supply unit 61 stops (S56).

Accordingly, the supply unit 61 is unable to supply the power to the execution unit 62 (S57).

The execution unit 62 stops the execution of the activation program in the middle. Since the activation is incomplete, the handheld printer 10 is not ready for use. In other words, the power fails to be turned on normally. In this case, in order to turn on the power normally, the user presses the power switch 20S again and keeps pressing the power switch 20S for a period of time longer than the period of time indicated by S54 in FIG. 14.

In the handheld printer 10, the execution unit 62 such as the CPU outputs a power holding signal to continue the power supply, thereby reducing cost and downsizing the handheld printer 10. On the other hand, it takes time to complete the activation program. In the meantime, the user keeps pressing the power switch 20S to continue the power supply. Typical handheld printers do not provide information on when to release the power switch 20S.

However, in the present device and the present method, the execution unit 62 completes the activation program and the notification unit 63 provides the information indicating that the activation is complete as described above. Accordingly, the user acknowledges when to release the power switch 20S.

In addition, when the user uses the handheld printer 10 during charging, the notification unit 63 temporarily stops providing the information indicating that the charging is in progress, so as to provide the information indicating that the activation is complete alone. Accordingly, the user easily acknowledges the changes in what is notified. When providing information, the notification unit 63 employs a method that allows the user to easily notice the information. For example, when providing information visually, the notification unit 63 changes the light color or the lighting state according to the information to be provided. By contrast, when providing information aurally, the notification unit 63 changes the sound output, such as the volume, the tempo, or the melody, according to the information to be provided.

A carrier medium carrying program code according to the embodiments described above is providable. Alternatively, e.g., a server device may be providable that stores the program code and provides the program code upon a download request. Alternatively, e.g., a communication system constructed of a communication terminal and an electronic device may be providable.

The present invention can be implemented in any convenient form, for example using dedicated hardware, or a mixture of dedicated hardware and software. The present invention may be implemented as computer software implemented by one or more networked processing apparatuses. The processing apparatuses can include any suitably programmed apparatuses such as a general-purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can include a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid-state memory device.

## Claims

1. An electronic device (10) comprising:
a reception unit (60) configured to receive an instruction of power supply;
a supply unit (61) configured to supply power in response to the instruction of power supply;
an execution unit (62) configured to execute an activation program to activate the electronic device (10), in response to the power supplied; and
a notification unit (63) configured to provide information indicating that activation of the electronic device (10) is complete, in response to a finish of execution of the activation program,
the supply unit (61) configured to continue or stop supplying the power depending on whether the reception unit (60) continues receiving the instruction of power supply until the finish of execution of the activation program,
the supply unit (61) configured to continue supplying the power after the finish of execution of the activation program.

2. The electronic device (10) according to claim 1,
wherein the notification unit (63) is further configured to provide other information different from the information indicating that activation of the electronic device (10) is complete, and
wherein the supply unit (61) is configured to request the notification unit (63) to stop providing the other information, in response to the instruction of power supply while the notification unit (63) provides the other information.

3. The electronic device (10) according to claim 2, further comprising an accumulation unit (64) configured to accumulate power,
wherein the supply unit (61) is configured to supply the power from the accumulation unit (64), and
wherein the notification unit (63) is configured to provide information indicating that accumulation of the power is in progress in the accumulation unit (64), as the other information.

4. The electronic device (10) according to any one of claims 1 to 3,
wherein the notification unit (63) includes at least one of a visual notification unit and an auditory notification unit.

5. The electronic device (10) according to claim 4,
wherein the visual notification unit is configured to change a color according to information that the visual notification unit provides.

6. The electronic device (10) according to claim 4 or 5,
wherein the visual notification unit includes a light emitter, and
wherein the visual notification unit is configured to change a lighting state of the light emitter according to information that the visual notification unit provides.

7. The electronic device (10) according to any one of claims 4 to 6,
wherein the auditory notification unit is configured to change a sound output according to information that the auditory notification unit provides.

8. The electronic device (10) according to any one of claims 1 to 7, further comprising a power switch (20S),
wherein the reception unit (60) is configured to continue receiving the instruction of power supply while the power switch (20S) keeps being pressed.

9. The electronic device (10) according to any one of claims 1 to 8,
wherein the execution unit (62) is configured to, when the execution of the activation program finishes, instruct the supply unit (61) to continue supplying the power and request the notification unit (63) to provide information indicating that the execution of the activation program finishes.

10. The electronic device (10) according to any one of claims 1 to 8,
wherein the execution unit (62) is further configured to execute a shutdown sequence of finishing an operation of the electronic device (10), and
wherein the execution unit (62) is configured to, when the shutdown sequence is complete, instruct the supply unit (61) to stop supplying the power and request the notification unit (63) to provide information indicating that the shutdown sequence is complete.

11. A method for providing information, the method comprising:
receiving an instruction of power supply;
supplying power in response to the instruction of power supply;
executing an activation program to activate an electronic device (10), in response to the power supplied; and
providing information indicating that activation of the electronic device (10) is complete, in response to a finish of execution of the activation program,
the supplying continuing or stopping supplying the power depending on whether the receiving continues receiving the instruction of power supply until the finish of execution of the activation program,
the supplying continuing supplying the power after the finish of execution of the activation program.

12. A carrier medium carrying computer-readable program code that causes a computer to perform the method according to claim 11.
